# EUROPÄISCHE PATENTSCHRIFT

(11) **EP 3 162 188 B1**
(45) Veröffentlichungstag und Bekanntmachung des Hinweises auf die Patenterteilung: **01.04.2020**
(21) Anmeldenummer: 16191135.9
(22) Anmeldetag: 28.09.2016
(51) Int. Cl.: A01F 15/07, A01F 15/08

(54) **RUNDBALLENPRESSE FÜR HALMGUT**
ROUND BALER FOR STALK
PRESSE À BALLES RONDES POUR FOURRAGE

(30) Priorität: 30.10.2015 AT 509222015
(43) Veröffentlichungstag der Anmeldung: 03.05.2017
(73) Patentinhaber: Göweil Maschinenbau GmbH, 4202 Kirchschlag (AT)
(72) Erfinder: Göweil, Herbert, 4202 Kirchschlag (AT)
(74) Vertreter: Hübscher & Partner Patentanwälte GmbH

(56) Entgegenhaltungen:
- EP-A1- 1 602 270
- WO-A1-2014/129890
- WO-A1-2015/160242

## Beschreibung

Die Erfindung bezieht sich auf eine Rundballenpresse für Halmgut mit einem auf einem Fahrgestell angeordneten Pressgehäuse, das einen fahrgestellfesten Gehäuseteil und eine an diesem Gehäuseteil um eine obere Anlenkachse aufschwenkbar gelagerte Auswurfklappe umfasst, mit auf den fahrgestellfesten Gehäuseteil und die Auswurfklappe verteilten, eine Presskammer umfangsseitig begrenzenden, mit einem Antrieb verbundenen Presswalzen und mit einer Einrichtung zum Ummanteln der gepressten Halmgutballen mit einer Hülle.

Zum Herstellen von Rundballen aus landwirtschaftlichem Halmgut werden Rundballenpressen eingesetzt, die ein auf einem Fahrgestell angeordnetes Pressgehäuse mit einer Presskammer aufweisen, deren Mantel aus antreibbaren, im Pressgehäuse gelagerten Presswalzen gebildet wird (EP 1 602 270 A1). Das mittels eines Aufnahmeförderers beim Überfahren vom Boden aufgenommene Halmgut wird gegebenenfalls nach einer Zerkleinerung zwischen zwei Presswalzen in die Presskammer gefördert und durch die angetriebenen Presswalzen umgewälzt und zu einem Ballen gewickelt, der durch die laufende Zufuhr des sich in Windungsform außen an den bereits gebildeten Wickel anlegenden Halmguts zunehmend verdichtet wird. Der auf diese Weise gebildete Rundballen wird dann innerhalb der Presskammer mit einer Folie oder einem Netz ummantelt, bevor er ausgeworfen wird. Zu diesem Zweck ist das Pressgehäuse in einen fahrgestellfesten Gehäuseteil und eine um eine obere Anlenkachse an diesem aufschwenkbar gelagerte Auswurfklappe unterteilt. Da die Umlaufbewegung des Halmguts in der geschlossenen Presskammer eine Aufwärtsförderung des Halmguts im Bereich der Auswurfklappe bedingt und durch die unteren Presswalzen des fahrgestellfesten Gehäuseteils der ummantelte Rundballen beim Öffnen der Auswurfklappe aus dem Pressgehäuse ausgetragen wird, drehen sich der aus dem Pressgehäuse rollende Rundballen und die Presswalzen der Abwurfklappe gleichsinnig mit der Folge, dass die endseitige Presswalze, die die durch die Auswurfklappe gebildete Auswurföffnung begrenzt und beim Öffnen der Auswurfklappe am ausrollenden Rundballen anliegt, im Anliegebereich gegensinnig zur Bewegung der Oberfläche des Rundballens angetrieben wird. Die damit verbundene zusätzliche Belastung der den Rundballen ummantelnden Hülle, die bereits aufgrund des Verdichtungsdrucks des Rundballens erheblichen Zugspannungen ausgesetzt ist, bringt die Gefahr einer Überlastung der Hülle und damit eines unzureichenden Zusammenhalts des Rundballens mit sich. In der WO2014/129890 A1 ist eine Rundballenpresse mit einer Auswurfklappe dargestellt.

Der Erfindung liegt somit die Aufgabe zugrunde, eine Rundballenpresse so auszugestalten, dass der fertige Rundballen ohne Gefährdung seiner Mantelhülle aus dem Pressengehäuse ausgetragen werden kann.

Ausgehend von einer Rundballenpresse der eingangs geschilderten Art löst die Erfindung die gestellte Aufgabe dadurch, dass die Auswurfklappe eine den Presswalzen vorgelagerte, frei drehbar gelagerte Stützwalze aufweist, die aus einer Ruhestellung bei geschlossener Auswurfklappe in eine die Auswurföffnung für den ummantelten Halmgutballen beim Öffnen der Auswurfklappe begrenzende Arbeitsstellung verlagerbar angeordnet ist.

Zufolge dieser Maßnahme begrenzt beim Öffnen der Auswurfklappe nicht die endseitige Presswalze, sondern die aus ihrer Ruhestellung in die Arbeitsstellung verlagerte, frei drehbar gelagerte Stützwalze die sich zwischen dem fahrgestellfesten Gehäuseteil und der Auswurfklappe ergebende Auswurföffnung, sodass diese Stützwalze am aus dem Pressgehäuse ausrollenden Rundballen anliegt und von ihm entgegen dem Drehsinn der angetriebenen Presswalzen mitgenommen wird. Dies bedeutet, dass der Rundballen durch die Stützwalze lediglich einer radialen Druckbelastung unterworfen wird, was aufgrund des auf die Hülle radial nach außen wirkenden Drucks des gepressten Halmguts zu keiner Mehrbelastung, sondern eher zu einer Entlastung der Hülle führt. Zumindest kann die sonst bestehende Gefahr einer Überlastung der Hülle vermieden und damit gesichert werden, dass der Rundballen durch die Hülle in seiner Form zusammengehalten wird.

Zum Schließen der Auswurfklappe ist die Stützwalze wiederum aus der Arbeitsstellung in eine ausgeschwenkte Ruhestellung zu verlagern, um bei geschlossener Auswurfklappe eine über die Presswalzen durchgehende Begrenzung der Presskammer zu erreichen.

Einfache Konstruktionsverhältnisse ergeben sich, wenn die Stützwalze mithilfe eines Schwenkhebelpaars zwischen der Ruhestellung und der Arbeitsstellung verschwenkbar gelagert ist. Um eine sichere Austragung des Rundballens aus dem Pressgehäuse ohne Verletzung der den Rundballen ummantelnden Hülle zu gewährleisten, ist für eine Verlagerung der Stützwalze in Abhängigkeit vom Öffnungswinkel der Auswurfklappe zu sorgen, was in einfacher Weise durch das Vorsehen eines entsprechenden Sensors für den Öffnungswinkel der Auswurfklappe konstruktiv gelöst werden kann.

In der Zeichnung ist der Erfindungsgegenstand beispielsweise dargestellt. Es zeigen
- Fig. 1: eine erfindungsgemäße Rundballenpresse in einer zum Teil aufgerissenen schematischen Seitenansicht mit geschlossener Auswurfklappe und
- Fig. 2: diese Rundballenpresse in einer der Fig. 1 entsprechenden Darstellung, jedoch mit einer teilweise geöffneten Auswurfklappe.

Die Rundballenpresse gemäß dem dargestellten Ausführungsbeispiel weist ein auf einem Fahrgestell 1 angeordnetes Pressgehäuse 2 auf, das in einen fahrgestellfesten Gehäuseteil 3 und eine Auswurfklappe 4 unterteilt ist, die um eine obere Anlenkachse 5 am fahrgestellfesten Gehäuseteil 3 aufschwenkbar gelagert ist. Das Pressgehäuse 2 umfasst eine Presskammer, die umfangsseitig durch angetriebene Presswalzen 6 begrenzt wird. Das zu einem Rundballen 7 aufzuwickelnde und zu verdichtende Halmgut wird durch einen Aufnahmeförderer 8 vom Boden aufgenommen und gegebenenfalls nach einer Zerkleinerung zwischen zwei einen Einlass 9 bildenden Presswalzen 6 in die Presskammer gefördert, wenn die mittels einer Deichsel 10 beispielsweise an einen Ackerschlepper angehängte Rundballenpresse über das auf einem Feld liegende Halmgut gezogen wird.

Der Antrieb der Presswalzen 6 erfolgt in herkömmlicher Weise über eine aus Übersichtlichkeitsgründen nicht dargestellte Zapfwelle, wobei die einzelnen Presswalzen 6 beispielsweise mit außerhalb der Presskammer vorgesehenen, durch eine Kette antreibbaren Kettenrädern versehen sein können. Aufgrund dieses Presswalzenantriebs wird das über den Aufnahmeförderer 8 in die Presskammer eingebrachte Halmgut zunächst von den an den Presskammereinlass 9 anschließenden unteren Presswalzen 6 des fahrgestellfesten Gehäuseteils 3 der endseitigen Presswalze 6 der Auswurfklappe 4 zugefördert, bevor es durch die anschließenden Presswalzen 6 entlang der Auswurfklappe 4 in einer Umlaufbewegung hochgefördert wird, um durch die Presswalzen 6 des Gehäuseteils 3 wieder abwärts geführt zu werden. Das über den Aufnahmeförderer 8 zugeführte Halmgut wird somit Windung für Windung zu einem Halmgutwickel aufgewickelt und mit zunehmendem Wickeldurchmesser zunehmend verdichtet, bis der fertige Rundballen 7 durch eine Folie oder ein Netz ummantelt wird, um das Halmgut in Form eines verdichteten Rundballens 7 festzuhalten. Die zur Ummantelung vorgesehene Hülle 11 wird in herkömmlicher Weise in die Presskammer eingeführt und um den Halmgutwickel gewunden, bevor die Auswurfklappe 4 zum Austragen des ummantelten Rundballens 7 aufgeschwenkt wird.

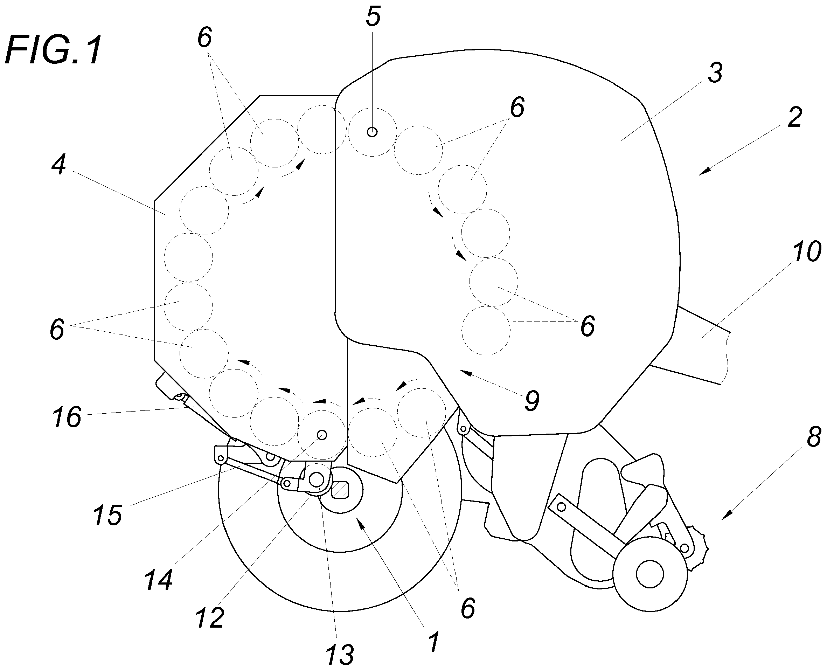

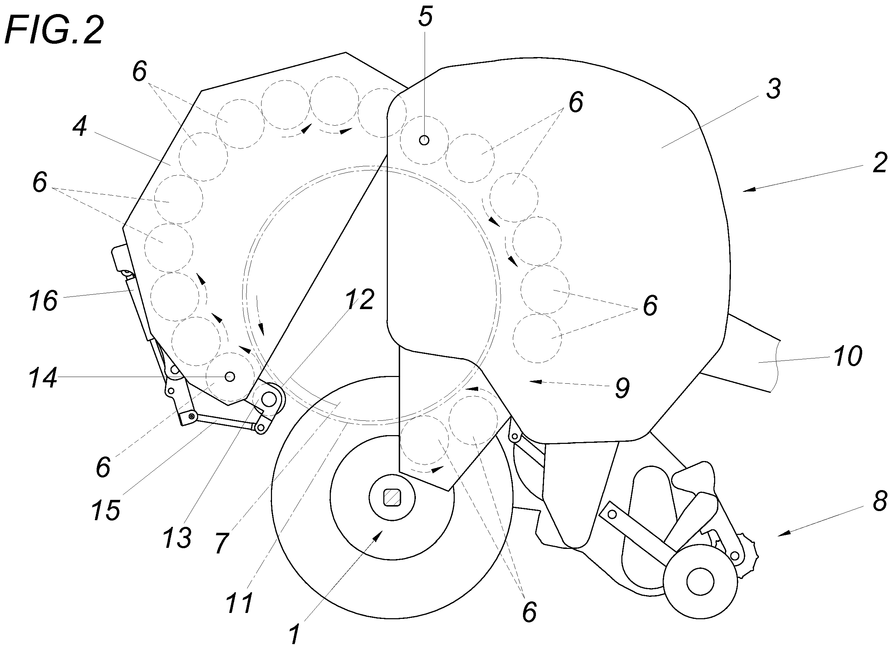

Wie der Fig. 2 entnommen werden kann, würde sich beim Öffnen der Auswurfklappe 4 der aus dem Pressgehäuse 2 ausrollende Rundballen 7 an die endseitige Presswalze 6 der Auswurfklappe 4 anlegen, was aufgrund des gleichen Drehsinns dieser Presswalze 6 und des aus dem Pressgehäuse 2 ausrollenden Rundballens 7 zu einer gegensinnigen Oberflächenbewegung dieser Teile im Anliegebereich führen würde. Um die damit verbundene Zusatzbelastung der Hülle 11 des Rundballens 7 zu vermeiden, ist die Auswurfklappe 4 im Bereich ihres der Anlenkachse 5 gegenüberliegenden Endes mit einer Stützwalze 12 versehen, die frei drehbar in einem Schwenkhebelpaar 13 gelagert ist und mithilfe dieses Schwenkhebelpaars 13 um eine Achse 14 zwischen einer ausgeschwenkten Ruhestellung gemäß der Fig. 1 in eine eingeschwenkte Arbeitsstellung verlagert werden kann, wie dies in der Fig. 2 ersichtlich ist. Die Schwenkverstellung erfolgt gemäß dem dargestellten Ausführungsbeispiel über ein Hebelgestänge 15, an dem ein Schwenkzylinder 16 angreift.

Wird die Auswurfklappe 4 aus der Schließstellung nach der Fig. 1 zum Austragen des ummantelten Rundballens 7 geöffnet, so wird in Abhängigkeit vom Öffnungswinkel der Schwenkzylinder 16 beaufschlagt, um die Stützwalze 12 aus ihrer Ruhestellung in die Arbeitsstellung zu verschwenken, in der die Stützwalze 12 die sich zwischen dem gestellfesten Gehäuseteil 3 und der Auswurfklappe 4 ergebende Auswurföffnung begrenzt und damit nicht die endseitige Presswalze 6 der Auswurfklappe 4, sondern die frei drehbare Stützwalze 12 zur Anlage am Rundballen 7 kommt. Aufgrund der frei drehbaren Lagerung kann die Stützwalze 12 im Wesentlichen schlupffrei vom Rundballen 7 mitgedreht werden, wodurch zusätzliche Zugspannungen der den Rundballen 7 ummantelnden Hülle 11 vermieden werden.

## Patentansprüche

1. Rundballenpresse für Halmgut mit einem auf einem Fahrgestell (1) angeordneten Pressgehäuse (2), das einen fahrgestellfesten Gehäuseteil (3) und eine an diesem Gehäuseteil (3) um eine obere Anlenkachse (5) aufschwenkbar gelagerte Auswurfklappe (4) umfasst, mit auf den fahrgestellfesten Gehäuseteil (3) und die Auswurfklappe (4) verteilten, eine Presskammer umfangsseitig begrenzenden, mit einem Antrieb verbundenen Presswalzen (6) und mit einer Einrichtung zum Ummanteln der gepressten Halmgutballen mit einer Hülle (11), **dadurch gekennzeichnet, dass** die Auswurfklappe (4) eine den Presswalzen (6) vorgelagerte, frei drehbar gelagerte Stützwalze (12) aufweist, die aus einer Ruhestellung bei geschlossener Auswurfklappe (4) in eine die Auswurföffnung für den ummantelten Halmgutballen beim Öffnen der Auswurfklappe (4) begrenzende Arbeitsstellung verlagerbar angeordnet ist.

2. Rundballenpresse nach Anspruch 1, **dadurch gekennzeichnet, dass** die Stützwalze (12) mithilfe eines Schwenkhebelpaars (13) zwischen der Ruhestellung und der Arbeitsstellung verschwenkbar gelagert ist.

3. Rundballenpresse nach Anspruch 1 oder 2, **dadurch gekennzeichnet, dass** die Stützwalze (12) in Abhängigkeit vom Öffnungswinkel der Auswurfklappe (4) zwischen der Ruhelage und der Arbeitsstellung verlagerbar angeordnet ist.

## Claims

1. Round baling press for stalk stock having a press housing (2) disposed on a running gear (1) and comprising a housing part (3), which is fixed to the running gear, and an ejection flap (4) mounted on this housing part (3) so that it can pivot upwards about an upper articulation spindle (5), having pressing rollers (6) which are distributed on the housing part (3), which is fixed to the running gear, and the ejection flap (4), peripherally define a pressing chamber and are connected to a drive, and having a device for wrapping the pressed stalk stock bales with a wrapper (11), **characterised in that** the ejection flap (4) comprises a supporting roller (12) mounted upstream of the pressing rollers (6) and mounted in a freely rotatable manner, which supporting roller is disposed so as to be displaceable from an inoperative position when the ejection flap (4) is closed to an operative position defining the ejection opening for the wrapped stalk stock bale when the ejection flap (4) is being opened.

2. Round baling press as claimed in claim 1, **characterised in that** the supporting roller (12) is mounted so as to be able to pivot between the inoperative position and the operative position with the aid of a pivot lever pair (13).

3. Round baling press as claimed in claim 1 or 2, **characterised in that** the supporting roller (12) is disposed so as to be displaceable between the inoperative position and the operative position in dependence upon the opening angle of the ejection flap (4).

## Revendications

1. Presse à balles rondes pour le fourrage, comprenant un corps de presse (2) disposé sur un châssis roulant (1), lequel comporte un élément de corps (3) solidaire du châssis roulant et une trappe d'éjection (4) montée sur cet élément de corps (3) de manière à pouvoir pivoter autour d'un axe d'articulation (5) supérieur, comprenant des rouleaux de pressage (6) qui sont répartis sur l'élément de corps (3) solidaire du châssis et sur la trappe d'éjection (4), qui délimitent une chambre de pressage sur la périphérie et qui sont reliés à un entraînement, et comprenant un dispositif servant à envelopper les balles de fourrage pressées avec une enveloppe (11), **caractérisée en ce que** la trappe d'éjection (4) comporte un rouleau d'appui (12) pouvant tourner librement, monté en amont des rouleaux de pressage (6), lequel peut être déplacé depuis une position de repos dans laquelle la trappe d'éjection (4) est fermée jusqu'à une position de travail délimitant l'ouverture d'éjection pour les balles de fourrage enveloppées lors de l'ouverture de la trappe d'éjection (4).

2. Presse à balles rondes selon la revendication 1, **caractérisée en ce que** le rouleau d'appui (12) peut être monté de manière pivotante entre la position de repos et la position de travail à l'aide d'une paire de leviers pivotants (13).

3. Presse à balles rondes selon la revendication 1 ou 2, **caractérisée en ce que** le rouleau d'appui (12) peut être déplacé entre la position de repos et la position de travail en fonction de l'angle d'ouverture de la trappe d'éjection (4).
